# EUROPÄISCHE PATENTANMELDUNG

(11) **EP 1 921 566 A1**
(43) Veröffentlichungstag der Anmeldung: **14.05.2008**
(21) Anmeldenummer: 07013381.4
(22) Anmeldetag: 09.07.2007
(51) Int. Cl.: G06K 7/14

(54) **Anordnung zum Verarbeiten von Kontrastbildern**

(30) Priorität: 10.07.2006 DE 202006010705 U
(71) Anmelder: HELICOM Entwicklungsgesellschaft für Telekommunikation und Medientechnik mbH, 48291 Telgte (DE)
(72) Erfinder: Kemper, Martin Dr., 48167 Münster (DE)
(74) Vertreter: Brosch, Oliver

(57) **Zusammenfassung**

Die Erfindung bezieht sich auf eine Anordnung zum Verarbeiten von Kontrastbildern mit einem optischen Sensor, einem Netzwerkadapter, einer Zentrale und Anschlussmittel zu einem lokalen Computer, wobei das vom Sensor ermittelte Kontrastbild über den Netzwerkadapter an eine Zentrale gesendet wird und die dem Kontrastbild zugeordnete numerische oder alphanumerische lnformation über eine Datenverbindung des Computers oder über den Netzwerkadapter empfangbar ist.

## Beschreibung

### Anordnung:

Vorrichtungen zum Verarbeiten von Kontrastbildern sind hinlänglich bekannt. Aus der DE 200 09 787.3, angemeldet am 14.12.2000 ist bekannt, beispielsweise das Kontrastbild eines Heizungsmessfühlers oder andere Anzeigen nicht als lesbare numerische Information zu ermitteln, sondern als Kontrastbild in Form einer 2-dimensionalen Anzeige.

Eine besondere Form des Kontrastbildes ist ein Barcode, der als Strichcode oder sogenannter Datamatrix-Code verwendet wird. Verwendungen als Strichcode begannen in den siebziger Jahren und sind heute eine nicht mehr wegdenkbare Technik bei der Erfassung von Waren im Supermarkt. In den späten 90er Jahren wurden mathematische Verfahren entwickelt, eine 2-dimensionale Matrix (Kontrastbild) als Ergänzung der linearen Barcode-Technik einzusetzen.

Die entsprechenden Lesegeräte, beispielsweise in einer Ausführung als sogenannter Touch-Reader für den Nahbereich oder sogenannte Longdistance-Reader sind seitdem im Markt verfügbar. Diese werden mittels serieller Schnittstelle oder heute mittels USB an den verarbeitenden Computer angeschlossen. Die Dekodierung, d. h. die numerische Verarbeitung findet meistens direkt in den Lesegeräten statt.

Nachteilig bei diesen Geräten ist vor allem der hohe Preis, da in den Lesegeräten ein leistungsfähiger Minicomputer zur Bildverarbeitung, d. h. Umsetzung des Kontrastbildes auf eine numerische Information, eingesetzt wird.

Anstelle des lokalen Anschlusses von Barcode-Lesegeräten an einen Computer sind auch Anwendungen bekannt (DE 295 18 875.5 vom 24.11.1995), die Barcodes über Handys an eine Zentrale zu versenden. Hierbei werden auch rückwärtige Aktionen auf das übertragene Lesegerät übermittelt, beispielsweise Displayanzeigen oder Konfigurationsdaten für Änderungen in der Benutzerführung.

Nachteilig hier ist die Verwendung von Handys. Zur Übertragung wird ein Handy verwendet, was relativ umständlich sein kann und wegen der häufigen Modelländerungen auch ständige Anpassungskosten nach sich zieht.

Die Ausführung einer Vorrichtung, die undekorierte Barcodedaten versendet, wobei diese in einer Zentrale ausgewertet werden, findet sich in DE 203 01 740.4, angemeldet am 04.02.2003. Hier wird vorgeschlagen, einen 2-D-Barcode als Bitmap ohne lokale numerische Verarbeitung mittels Handy an eine Zentrale zu versenden zur dortigen Auswertung und Verarbeitung. Auch hier ist die Verwendung eines Handys aus besagten Gründen nachteilig.

Andere Ausführungen zur Übertragung von Barcodes DE 202004 015 835.3 schlagen vor, Barcodes nach der Erfassung durch das optische Lesemodul und Dekodierung in der Leseeinheit als numerische Information direkt an eine Zentrale zu senden und dort zu registrieren. Parallel dazu werden die Barcodes an diese angeschlossene Kasse übertragen.

Nachteilig hier ist, dass die Daten ohne jegliche Interpretation an die Zentrale aus informativen Gründen gesendet werden.

Aus Produktinformationen der Helicom GmbH, Deutschland, sind Standardprodukte bekannt, aus einem per Mobilfunk angeschlossenen mobilen Barcodeleser Barcodedaten an eine Zentrale zu versenden und aus der eingehenden Barcode-Information in der Zentrale eine automatische Intemetverbindung aufzubauen (Vermarktung seit 1998).

Neben den optischen Kontrastbildern, die eine Kodierung bewirken, sind andere optische Kontrastbilder bekannt, beispielsweise das Zahlenfeld eines Lottoscheins. Diese werden üblicherweise von Maschinen ausgewertet, die das Zahlenfeld bzw. die darin enthaltenen Kreuzchen per Bildverarbeitung auswerten und den entsprechenden Zahlencode ermitteln. Ähnliches gilt beispielsweise für Wahlscheine für eine Parteienwahl oder eine Abstimmung jeglicher Art.

Erweitert man den Begriff des optischen Kontrastbildes, so sind auch elektronische Kontrastbilder vorstellbar, die beispielsweise der Bitmap einer Chipkarte entsprechen oder den Inhalt eines verschlüsselten elektronischen Speichers. Dies kann beispielsweise ein Funketikett sein oder eine wie ein Funketikett (RF-ID-Technik) arbeitende Zutrittskarte. Vorstellbar sind auch Medien des elektronischen Bezahlens, basierend auf dieser Technik, beispielsweise die NFC (Near Field Communication) Technologie.

Die Aufgabe der vorliegenden Erfindung besteht darin, die bekannten Techniken dahingehend zu verbessern, dass eine besonders kostengünstige Gestaltung einer Anordnung zum Verarbeiten von Kontrastbildern möglich ist, die besonders flexibel einsetzbar ist.

Diese Aufgabe wird mittels einer Anordnung mit den Merkmalen des Anspruches 1 gelöst.

Bei der erfindungsgemäßen Neuerung ist vorgesehen, ein Kontrastbild, sei es ein optisches oder sei es ein elektronisches auf möglichst universelle Weise zu einer Zentrale, beispielsweise einem Netzwerkcomputer, zu übertragen und dieses Kontrastbild in dieser Zentrale auszuwerten. Die zentrale Auswertung beispielsweise von zweidimensionalen Barcodes erspart aufwändige Dekodiertechnik im optischen Lesemodul. Die zentrale Auswertung von RF-ID-Chips erhöht deren Sicherheit, da man keine im Lesemodul integrierte Dekodierung benötigt.

Das Kontrastbild wird von einem optischen oder elektronischen Sensor erfasst und die Sensordaten beispielsweise als Bitmuster an einen Netzwerkadapter übertragen. Dieser Netzwerkadapter hat die Aufgabe, die Daten des Sensors an die Zentrale zu übertragen und nach dortiger Auswertung und Rückmeldung des dem Kontrastbild zugeordneten numerischen oder alphanumerischen Codes eben diesen Code zum angeschlossenen lokalen Computer zu übertragen. Auf diese Weise können beliebige Kontrastbilder eingesetzt werden, da die Zuordnung und Auswertung aus einer beispielhaft genannten Bildinformation oder elektronischen Bitmap erfolgt. Idealerweise können Kompressionsverfahren, wie beispielsweise die JPEG-Komprimierung bzw. Bitmap-Kompressionen zum Einsatz kommen. Zur Auswertung des Kontrastbildes kann vorgesehen sein, die eigentliche Information mehrfach abzuspeichern und hierdurch eine redundante und besonders Fehler tolerante Systemausiegung zu erwirken. Das Netzwerk kann als drahtgebundes oder drahtloses Netzwerk ausgeführt sein, wobei bei drahtloser Technik beispielsweise WLAN, WiFi, GPRS oder UMTS vorgesehen sein kann. Alternativ kann eine herkömmliche Modemverbindung über eine Telefonleitung vorgesehen sein.

Ziel in der Anwendung der erfindungsgemäßen Anordnung ist es im nachfolgenden Ausführungsbeispiel optisch lesbare Kontrastbilder einem Artikel in einem Katalog zuzuordnen und in einem Bestellsystem zu verwenden.

Hierzu werden die Artikel eines Kataloges mit Kontrastbildern versehen. Der Anwender wählt mit dem Lesegerät, das den optischen Sensor enthält, den Artikel bzw. das dem Artikel zugeordnete Kontrastbild aus. Nach Bestätigung beispielsweise einer Triggertaste, wird das ausgewählte Kontrastbild über eine Datenverbindung zum Netzwerkadapter übermittelt, wobei hierbei die daraus entstehende Datei auch komprimiert werden kann. Diese Datei wird über ein Netzwerk an den Zentralrechner übertragen, dessen Software das Kontrastbild auswertet. Die hieraus berechnete numerische oder alphanumerische Information wird auf demselben Weg an den Netzwerkadapter übertragen, der diese information an den lokalen Computer überträgt. Der lokale Computer kann Teil eines Lagerverwaltungssystems sein oder beispielhaft ein Bestellsystem eines Lieferanten. Die Software des lokalen Computers übernimmt die numerischen oder alphanumerischen Daten zur weiteren Bearbeitung oder Verarbeitung. Sofern der lokale Computer keinen eigenen Netzwerkanschluss hat, kann vorgesehen sein, den Datenaustausch beispielsweise für eine Webshop-Software ebenfalls über den Netzwerkadapter erfolgen zu lassen. Dies ermöglicht sehr universelle und flexible Anwendungen sogar an Standorten, an denen kein lokales Netzwerk vorhanden ist, da man in diesem Fall den erfindungsgemäßen Netzwerkadapter als Mobilfunkadapter für eine GPRS- oder UMTS-Verbindung ausgestalten kann,

Die Kontrastbilder können als zweidimensionaler Standard-Barcode oder als beliebiges Kontrastbild sogar mit zusätzlichen Graustufen oder Farbinformationen verwendet werden. Vorgesehen ist auch die Verwendung von dreidimensionalen Kontrastbildern beispielsweise in Form eines Hologramms.

Alternativ zum Kontrastbild ist auch die Verwendung von Transpondern vorgesehen, die eine drahtlose Erkennung per Funk erlauben.

Idealerweise kann die Verbindung zwischen Netzwerkadapter und dem Zentralrechner als virtuelle oder feste Standleitung ausgestaltet sein, damit die Datenübertragung mit optimaler Geschwindigkeit iaufen kann.

Damit eine Vielzahl unterschiedlicher optischer Kontrastbilder in unterschiedlichen Größen verwendet werden können, ist vorgesehen, das Lesegerät mit einer verstellbaren Optik auszugestalten. Ähnlich der Ausführung bei einem Fotoapparat kann vorgesehen sein, optische Linsen mit der Möglichkeit einer festen oder variablen Brennweitenverstellung einzusetzen.

Vorgesehen ist auch eine Autofokus-Funktion, die die Bildschärfe optimal einstellt. Hierdurch wird eine Fokussierung selbst aus unterschiedlichen Entfernungen oder für unterschiedliche Kontrastbilder möglich.

Hilfreich zur Anwendung des Lesegerätes sind Führungshilfen, die als Zielkreuz, Linie oder Punkt vorgesehen sind und beispielsweise durch rote LEDs erzeugt werden können.

Zur Erkennung der Kontrastbilder ist neben sichtbarem Licht auch nicht sichtbares Licht wie beispielsweise Infrarotlicht vorgesehen. Dies kann Vorteile in bestimmten Umgebungsbereichen bieten.

Im Falle von elektronischen Kontrastbildern kann im folgenden Anwendungsbeispiel vorgesehen sein, eine Bezahlkarte mittels Übertragung über ein geeignetes Lesegerät so auszuwerten, dass die Bitmap der elektronischen Bezahlinformation beispielsweise auf einer NFC-Karte an die Zentrale zu übertragen und zentralseitig auszuwerten. Im Zuge einer solchen Auswertung ist es problemlos möglich, die Gültigkeit der Karte, die Anwendungsbereiche und andere zentral verfügbaren Parameter abzugleichen und letztlich dem anfragenden Lesegerät eine Bestätigungsmeldung für den Abschluss der Zahlung zukommen zu lassen. Wesentlicher Vorteil dieser zentralen Auswertung ist in diesem Fall die beliebige Verknüpfung mit anderen Daten, beispielsweise einem Bonussystem oder Rabettsystem. Ein weiterer Vorteil ist, dass die Lesegeräte selbst keine Auswertung der Information vornehmen müssen, was das Lesegerät einfach hält und besonders preisgünstig herstellbar macht.

Weiterer Vorteil kann in diesem Anwendungsbeispiel die flexible Parametrisierung sein, die sehr vorteilhaft nur einmal in der Zentrale durchgeführt wird und nicht in tausenden von Endgeräten. Für Bezahlsysteme kann vorgesehen sein, unterschiedliche Bereiche der Bitinformationen mit unterschiedlichen Schlüsseln zu versehen, so dass nicht eine Zentrale allein alle Schlüssel öffnen kann. Dabei kann vorgesehen sein, dass unterschiedliche Schlüsselinformationen gleichzeitig zu unterschiedlichen Zentralen gesendet werden und hierzu unter Umständen auch unterschiedliche Kommunikationswege verwendet werden, beispielsweise UMTS und WLAN. Hierdurch wäre in diesem Anwendungsbeispiel eine besonders hohe Übertragungssicherheit erreichbar.

In einem weiteren Anwendungsbeispiel soll die hohe Flexibilität der Anordnung dargelegt werden. Nutzt man das Handy des Bezahlers, das mit dieser NFC-Bezahlfunktion ausgestattet ist, kann es vorgesehen sein, den Kommunikationsweg dieses Handys und damit die Übertragung der Bezahldaten vorzunehmen. In diesem Fall ist es besonders vorteilhaft, die erfindungsgemäße Anordnung zu verwenden, da es keinerlei zusätzlicher Intelligenz im Handy bedarf. Es wird lediglich ein Kontrastbild übertragen und die Information über den erfolgten Bezahlvorgang zurückgemeldet. Diese Rückmeldung kann beispielsweise in der Form gestaltet sein, dass die Zentrale eine Zahlungsbestätigung als Barcode oder sogar beliebiges Kontrastbild auf das Display des Handys gibt, dass dann von einem Handscanner der Kasse gelesen werden kann bzw. vom Kassensystem im Falle eines Kontrastbildes gemäß der erfindungsgemäßen Anordnung gelesen wird. Hiermit wäre ein bestätigter Bezahlvorgang abgeschlossen. Alternativ kann vorgesehen sein, dies ebenfalls über die NFC-Nahfunkvertiindung herzustellen.

Weitere Anwendungsbeispiele in sehr ähnlicher Funktion können im Umfeld Ticketing, d. h. Überprüfung der Gültigkeit von Eintrittskarten, genannt werden sowie in der Zutrittskontrolle. Hier kann vorgesehen sein, das elektronische Kontrastbild einer passenden Rf-ID-Karte erst in der Zentrale auszuwerten, damit beispielsweise sich kurzfristig ändernde Profile unmittelbar berücksichtigt werden können. In ähnlicher Weise kann dieses Verfahren vorteilhaft zur Überprüfung der Gültigkeit elektronischer Tickets beispielsweise in Form von RF-ID-Ausweisen verwendet werden.

Als Beispiel für ein sich geändertes Profil könnte das Nutzungsverfahren für Zusatzdienste sein, wenn beispielsweise ein Ticket mit einer Bezahlfunktion kombiniert wird. Dann kann es vorgesehen sein, dem Ticket mehrere Berechtigungen mit einem einzelnen Wert zuzuordnen und bei Wertüberschreitung das Ticket für einen weiteren Zugang zu sperren.

## Patentansprüche

1. Anordnung zum Verarbeiten von Kontrastbildern mit einem optischen Sensor, einem Netzwerkadapter, einer Zentrale und Anschlussmittel zu einem lokalen Computer, **dadurch gekennzeichnet, dass** das vom Sensor ermittelte Kontrastbild über den Netzwerkadapter an eine Zentrale gesendet wird und die dem Kontrastbild zugeordnete numerische oder alphanumerische Information über eine Datenverbindung des Computers oder über den Netzwerkadapter empfangbar ist.

2. Anordnung nach Anspruch 1, **dadurch gekennzeichnet, dass** der Netzwerkadapter als LAN-Modul, als WLAN-Modul, als WiFi-Modul oder als Mobilfunkmodul mit GPRS oder UMTS ausgeführt ist.

3. Anordnung nach Anspruch 1, **dadurch gekennzeichnet, dass** der Netzwerkadapter als Telefonmodul ausgeführt ist.

4. Anordnung nach einem der vorherigen Ansprüche, **dadurch gekennzeichnet, dass** das Kontrastbild als zweidimensionaler Barcode ausgeführt ist.

5. Anordnung nach einem der vorherigen Ansprüche, **dadurch gekennzeichnet, dass** das Kontrastbild als zweidimensionale Grafik mit zusätzlichen Farbinformationen ausgeführt ist.

6. Anordnung nach einem der vorherigen Ansprüche, **dadurch gekennzeichnet, dass** das Kontrastbild als dreidimensionale Grafik beispielsweise als Hologramm ausgeführt ist.

7. Anordnung nach einem der vorherigen Ansprüche, **dadurch gekennzeichnet, dass** anstelle des Kontrastbildes ein Transponder als Identifikationsmerkmal verwendet wird.

8. Anordnung nach einem der vorherigen Ansprüche, **dadurch gekennzeichnet, dass** zwischen dem Netzwerkadapter und der Zentrale eine virtuelle oder echte Standleitung besteht.

9. Anordnung nach einem der vorherigen Ansprüche, **dadurch gekennzeichnet, dass** zwischen dem Netzwerkadapter und der Zentrale eine virtuelle Standleitung auf einem Mobilfunknetz besteht, die durch regelmäßigen Datenaustausch aufrechterhalten wird.

10. Anordnung nach einem der vorherigen Ansprüche, **dadurch gekennzeichnet, dass** der optische Sensor mit einem optischen Linsensystem ausgestaltet ist.

11. Anordnung nach Anspruch 10, **dadurch gekennzeichnet, dass** das Linsensystem eine Brennweitenverstellung aufweist.

12. Anordnung nach Anspruch 10 oder 11, **gekennzeichnet durch** eine Autofokus-Funktion.

13. Anordnung nach einem der vorherigen Ansprüche, **dadurch gekennzeichnet, dass** der optische Sensor mit einer Objektbeleuchtung ausgestaltet ist, die neben optisch sichtbarem Licht alternativ oder zusätzlich Infrarotlicht verwendet.

14. Anordnung nach einem der vorherigen Ansprüche, **gekennzeichnet durch** eine Zielführung zum Objekt als optisch sichtbares Fadenkreuz, Ziellinie oder Punkt.

15. Anordnung nach einem der vorherigen Ansprüche, **dadurch gekennzeichnet, dass** der Netzwerkadapter nicht nur die Kontrastinformation überträgt, sondern auch zusätzliche Daten für den Anwender.
